# EUROPÄISCHE PATENTSCHRIFT

(11) **EP 3 988 498 B1**
(45) Veröffentlichungstag und Bekanntmachung des Hinweises auf die Patenterteilung: **30.09.2026**
(21) Anmeldenummer: 21189114.8
(22) Anmeldetag: 02.08.2021
(51) Int. Cl.: B67C 3/02, B67C 3/04, A23B 2/42

(54) **ABFÜLLANLAGE UND VERFAHREN ZUR HEISSABFÜLLUNG EINES FLÜSSIGEN PRODUKTS IN BEHÄLTER**
FILLING SYSTEM AND METHOD FOR FILLING A HOT LIQUID PRODUCT INTO CONTAINERS
USINE DE REMPLISSAGE ET PROCÉDÉ DE REMPLISSAGE À CHAUD D'UN RÉCIPIENT D'UN PRODUIT LIQUIDE

(30) Priorität: 20.10.2020 DE 102020127542
(43) Veröffentlichungstag der Anmeldung: 27.04.2022
(73) Patentinhaber: Krones AG, 93073 Neutraubling (DE)
(72) Erfinder: DUERR, Christoph, 93073 Neutraubling (DE); RUNGE, Torsten, 93073 Neutraubling (DE)
(74) Vertreter: Grünecker Patent- und Rechtsanwälte PartG mbB

(56) Entgegenhaltungen:
- EP-A1- 2 184 257
- EP-A1- 2 567 935
- WO-A1-2016/005109
- DE-A1- 102013 017 330
- DE-A1- 102016 217 342

## Beschreibung

Die Erfindung betrifft eine Abfüllanlage und ein Verfahren zur Heißabfüllung eines flüssigen Produkts in Behälter wie beispielsweise Flaschen.

Vor der Heißabfüllung flüssiger Produkte in Flaschen werden diese üblicherweise pasteurisiert und in einem Trimmkühler, auch Korrekturkühler genannt, im Wesentlichen auf die Abfülltemperatur gekühlt. Zur Einsparung von Heizenergie ist es zudem bekannt, beim Trimmkühlen zurückgewonnene Wärme zum Vorwärmen des Produkts in derselben Behandlungsanlage durch Wärmetausch in Wärmetauschern zu verwenden.

So ist beispielsweise aus der DE 10 2011 082 286 A1 eine Abfüllanlage zur Heißabfüllung von Getränken bekannt mit einem ersten Wärmekreislauf zur Rückführung von Wärme aus einem Korrekturkühler/Trimmkühler zu einem Vorwärmer für das Produkt und mit einem zweiten Kreislauf zum Zurückführen von Wärme aus den Rückläufen eines Flaschenkühler und eines Rückkühlers für wärmebehandeltes aber nicht abgefülltes Produkt in einen Zwischenspeicher für Heißwasser, um bei wechselnden Betriebszuständen eine möglichst konstante Wärmemenge zur Vorwärmung des Produkts bereitstellen zu können.

Aus der DE 10 2008 056 597 A1 ist ferner eine Abfüllanlage zur Heißabfüllung von Getränken bekannt, die einen Wärmekreislauf für die Rückgewinnung von Wärme aus einem Rückkühler und einen Wärmekreislauf zur Rückführung von Wärme aus einem Flaschenkühler umfasst, wobei diese Wärmekreisläufe unabhängig voneinander betrieben werden können. Die Abfüllanlage umfasst neben einer Füllmaschine und dem Flaschenkühler eine Vorwärmstufe zur eingangsseitigen Erwärmung des jeweiligen Produkts und eine Pasteurisierungsstufe mit einem Produkterhitzer. Ferner ist ein davon getrennter Warmwasserkreislauf zur Wärmeabgabe an das Produkt in der Vorwärmstufe sowie zur Wärmerückgewinnung aus dem Flaschenkühler und dem Rückkühler vorhanden. Der Produkterhitzer ist beispielsweise ein dampfbetriebener Kurzzeitherhitzer mit Heißhaltestrecke, in dem zu behandelnde Flüssigkeit für eine bestimmte Dauer auf der Behandlungstemperatur gehalten wird, z. B. zur Pasteurisierung. Der Produkterhitzer kann einen Korrekturkühler umfassen, um die behandelte Flüssigkeit auf eine für die Flaschenabfüllung geeignete Temperatur einzustellen. Die dabei der Flüssigkeit entzogene Wärmemenge wird möglichst an den Eingang des Produkterhitzers zurückgeführt, um nachströmende Flüssigkeit zu erhitzen.

Als nachteilig hat sich bei den bekannten Abfüllanlagen vor allem herausgestellt, dass die Wärmerückgewinnung mit zunehmender Pasteurisierungstemperatur, beispielsweise bei Pasteurisierungstemperaturen 95 bis 140 °C, vergleichsweise ineffizient ist.

Es besteht daher der Bedarf für diesbezüglich verbesserte Abfüllanlagen und Verfahren zur Heißabfüllung flüssiger Produkte in Flaschen.

Die gestellte Aufgabe wird mit einer Abfüllanlage gemäß Anspruch 1 und einem Verfahren gemäß Anspruch 5 gelöst.

Demnach dient die Abfüllanlage zur Heißabfüllung eines flüssigen Produkts, insbesondere eines Getränks, in Behälter, insbesondere Flaschen, und umfasst eine Vorwärmstufe zur eingangsseitigen Erwärmung des Produkts insbesondere für dessen Entgasung, eine Pasteurisierungsstufe zur Pasteurisierung des Produkts, eine Füllmaschine zum Abfüllen des Produkts in Flaschen und einen Behälterkühler zum Kühlen der mit dem Produkt gefüllten Behälter. Der Behälterkühler ist insbesondere ein Flaschenkühler zum Kühlen der mit dem Produkt gefüllten Flaschen.

Die Pasteurisierungsstufe umfasst einen Produkterhitzer, einen Trimmkühler (Korrekturkühler) für das zuvor pasteurisierte Produkt und einen Heißwasserkreislauf zum Wärmetausch mit dem Produkt im Produkterhitzer und im Trimmkühler.

Die Vorwärmstufe umfasst einen Produktwärmer und einen vom Heißwasserkreislauf getrennten Warmwasserkreislauf zur Wärmeabgabe an das Produkt im Produktwärmer sowie zur Wärmerückgewinnung aus dem Behälterkühler und/oder aus einem Rückkühler für von der Füllmaschine zurückgeführtes Produkt, also für Produkt, das zuvor pasteurisiert und trimmgekühlt, jedoch nicht abgefüllt wurde.

Dies reduziert die Temperaturdifferenz sowohl im Heißwasserkreislauf als auch im Warmwasserkreislauf zwischen Wärmeaufnahme und Wärmeabgabe des jeweiligen Übertragungsfluids, das im Regelfall Kühlwasser / Heizwasser ist. Dadurch lässt sich die Effizienz der Wärmerückgewinnung insgesamt steigern. Das heißt, die Wärmerückgewinnung mittels Heißwasserkreislauf findet insgesamt auf einem durchweg höheren Temperaturniveau statt, als die Wärmerückgewinnung mittels des Warmwasserkreislaufs.

Ferner umfasst der Heißwasserkreislauf eine mittels eines Ventils insbesondere graduell zuschaltbare Umgehungsleitung zur Umgehung des Trimmkühlers. Dadurch kann die Kühlleistung des Trimmkühlers und somit auch die dort an den Heißwasserkreislauf übertragene Wärmemenge flexibel an unterschiedliche Pasteurisierungstemperaturen und Abfülltemperaturen angepasst werden. Das heißt, ist eine geringere Kühlleistung erforderlich, kann ein in die Umgehungsleitung abgezweigter Teilstrom des Heißwasserkreislaufs erhöht werden und umgekehrt.

Das graduelle Zuschalten der Umgehungsleitung ist vorzugsweise stufenlos oder in einer Vielzahl einstellbarer Zwischenstufen mittels eines entsprechend ausgebildeten Regelventils möglich.

Wahlweise kann der Heißwasserkreislauf damit auch vollständig durch die Umgehungsleitung geführt werden, sodass der Trimmkühler dann nicht von Kühlwasser durchströmt wird. Dies ermöglicht eine flexible Anpassung des Heißwasserkreislaufs an unterschiedliche Betriebszustände der Abfüllanlage.

Vorzugsweise umfasst die Abfüllanlage ferner eine Regelung zur Anpassung einer stromabwärts des Trimmkühlers gemessenen Ist-Temperatur des Produkts an eine Solltemperatur insbesondere zur unmittelbar anschließenden Heißabfüllung durch anteilige Durchflussteilung am Ventil zum Trimmkühler und zur Umgehungsleitung hin. Dadurch lässt sich eine vorgegebene Abfülltemperatur auch bei schwankender Durchflussmenge und/oder wechselnder Pasteurisierungstemperatur mittels des Heißwasserkreislaufs anpassen und/oder konstant halten.

Vorzugsweise umfasst die Abfüllanlage ferner einen Entgaser und einen in der Vorwärmstufe angeordneten und dem Vorwärmer insbesondere nachgeschalteten Zwischenwärmer zur Erwärmung des Produkts in Ergänzung zum Produktwärmer auf eine Entgasungstemperatur des Entgasers. Für übliche Entgasungstemperaturen von beispielsweise 50 bis 70 °C eignet sich eine separate Wärmerückgewinnung aus einem Behälterkühler und/oder Rückkühler aufgrund der darin herrschenden Temperaturniveaus besonders gut. Somit ist eine energetisch effiziente Entgasung des flüssigen Produkts gegeben.

Vorzugsweise umfasst die Abfüllanlage ferner einen Entgaser und eine zugehörige Steuerung, die zur Anpassung eines Entgasungsdrucks im Entgaser an eine von der Vorwärmstufe vorgegebene und/oder an diese angepasste Entgasungstemperatur im Entgaser ausgebildet ist. Wird die Entgasungstemperatur aufgrund einer vergleichsweise geringen am Vorwärmer zur Verfügung stehenden Wärmemenge reduziert, so wird vorzugsweise auch der Entgasungsdruck reduziert, also das Entgasungsvakuum verstärkt, um einer ansonsten durch Reduzierung der Entgasungstemperatur verursachte Reduzierung der Entgasungseffizienz entgegen zu wirken und insbesondere eine solche Reduzierung zu verhindern. Damit lässt sich die Entgasung bei gleichbleibender Entgasungsqualität (Restgasgehalt im entgasten Produkt) an wechselnde Betriebszustände der Abfüllanlage anpassen, beispielsweise beim Anfahren der Abfüllanlage, wenn am Behälterkühler noch keine oder nur vergleichsweise geringe Abwärme anfällt.

Alternativ umfasst die Abfüllanlage den Entgaser, und die zugehörige Steuerung ist wahlweise oder dauerhaft zur Konstanthaltung einer Entgasungstemperatur im Entgaser und insbesondere auch zur Konstanthaltung eines zugeordneten Entgasungsdrucks im Entgaser ausgebildet. Die Wärmeleistung der Vorwärmstufe wird dann entsprechend zur Einhaltung der derart vorgegebenen Entgasungstemperatur geregelt.

Das beschriebene Verfahren dient der Heißabfüllung eines flüssigen Produkts und insbesondere Getränks in Behälter, insbesondere Flaschen. Demnach wärmt man das Produkt eingangsseitig insbesondere für dessen Entgasung vor. Dann wird das Produkt pasteurisiert und für die Abfüllung trimmgekühlt. Anschließend wird das Produkt in Behälter / Flaschen heiß abgefüllt. Schließlich werden die gefüllten Behälter / Flaschen mit Wasser gekühlt. Beim Trimmkühlen zurückgewonnene Abwärme wird in einen Heißwasserkreislauf geführt und von diesem für die Pasteurisierung an das Produkt abgegeben. Bei der Behälterkühlung / Flaschenkühlung gewonnene Abwärme und/oder bei der Rückkühlung von auf Abfülltemperatur erhitztem und vor Abfüllung (aus dem Bereich der Abfüllung) zurückgeführtem Produkt gewonnene Abwärme wird in einem Warmwasserkreislauf getrennt vom Heißwasserkreislauf geführt und vom Warmwasserkreislauf für die Vorwärmung an das Produkt abgegeben. Damit lassen sich die bezüglich der erfindungsgemäßen Vorrichtung beschriebenen Vorteile erzielen.

Ferner wird ein im Heißwasserkreislauf von der Pasteurisierung zurückgeführtes Übertragungsfluid elektronisch gesteuert / geregelt auf einen zum Trimmkühlen verwendeten ersten Teilstrom und einen das Trimmkühlen umgehenden zweiten Teilstrom aufgeteilt. Das heißt, der Heißwasserkreislauf wird stromaufwärts des Trimmkühlers elektronisch gesteuert / geregelt auf einem den Trimmkühler durchfließenden ersten Teilstrom und einen den Trimmkühler umgehenden zweiten Teilstrom aufgeteilt. Damit lässt sich die Kühlleistung des Trimmkühlers und die dort vom Heißwasserkreislauf aufgenommene Wärmemenge anpassen.

Vorzugsweise wird der erste Teilstrom in Abhängigkeit von einer Solltemperatur des Produkts und einer Ist-Temperatur des Produkts stromabwärts des Trimmkühlers graduell geregelt. Dies ermöglicht eine Anpassung der Kühlleistung und der am Trimmkühler vom Heißwasserkreislauf aufgenommenen Wärmemenge an unterschiedliche Pasteurisierungstemperaturen und/oder Abfülltemperaturen des Produkts.

Vorzugsweise kühlt der Trimmkühler das Produkt im Wesentlichen auf Abfülltemperatur. Darunter ist zu verstehen, dass zwischen dem Trimmkühler und der Füllmaschine keine weiteren Kühler oder Erhitzer angeordnet sind, sondern dass dazwischen lediglich die üblichen Wärmeverluste an Rohrleitungen oder dergleichen auftreten. Somit lässt sich die Abfülltemperatur am Trimmkühler einfach und flexibel einstellen.

Vorzugsweise wird das Produkt auf eine Pasteurisierungstemperatur von 95 bis 140 °C erhitzt. Bei derartigen Pasteurisierungstemperaturen ist die vom Warmwasserkreislauf getrennte Führung von Abwärme im Heißwasserkreislauf besonders energieeffizient.

Vorzugsweise wird das Produkt auf eine Entgasungstemperatur von 50 bis 70 °C vorgewärmt. Bei derartigen Entgasungstemperaturen ist die vom Heißwasserkreislauf getrennte Führung von Abwärme im Warmwasserkreislauf besonders energieeffizient.

Vorzugsweise wird das flüssige Produkt nach Aufnahme zurückgeführter Abwärme im Warmwasserkreislauf von einer dabei im Produkt erzielten Ist-Temperatur auf die Entgasungstemperatur mittels geregeltem Energieeintrag zusätzlich erwärmt. Dadurch lässt sich eine vorgegebene Entgasungstemperatur auch bei schwankenden Vorlauftemperaturen im Wärmekreislauf, beispielsweise beim Anfahren der Abfüllanlage, durch zusätzliche Zwischenerwärmung beispielsweise mittels elektrischer Energie, Dampf oder dergleichen einhalten.

Vorzugsweise wird das Produkt dann zusätzlich erwärmt, wenn die bei der Behälterkühlung / Flaschenkühlung gewonnene Abwärme und/oder die bei der Rückkühlung gewonnene Abwärme unter einem Schwellenwert für eine normale Abfüllung im Dauerbetrieb liegt. Damit lassen sich bestimmte Betriebszustände, wie beispielsweise das Anfahren der Abfüllanlage und/oder Unterbrechungen des Abfüllbetriebs oder dergleichen zugunsten einer konstanten Entgasungstemperatur kompensieren.

Vorzugsweise werden die Entgasungstemperatur und der jeweils zugehörige Entgasungsdruck an eine durch die Wärmeaufnahme vom Warmwasserkreislauf im Produkt erreichte Ist-Temperatur angepasst. Beispielsweise wird dann beim Absinken der Ist-Temperatur auch die Entgasungstemperatur und der Entgasungsdruck abgesenkt, also das Entgasungsvakuum verstärkt. Damit lassen sich unterschiedliche Betriebszustände der Abfüllanlage berücksichtigen, gegebenenfalls ohne eine zusätzliche Zwischenerwärmung des Produkts zwischen dem Vorwärmer und dem Entgaser.

Die Abfüllanlageist insbesondere eine Getränkeabfüllanlage zur Ausführung des oben oder weiter unten beschriebenen Verfahrens, mit einer Abfüllmaschine zur Abfüllung des Produkts in Behälter, insbesondere Getränkebehälter, wie beispielsweise Fässer oder Flaschen.

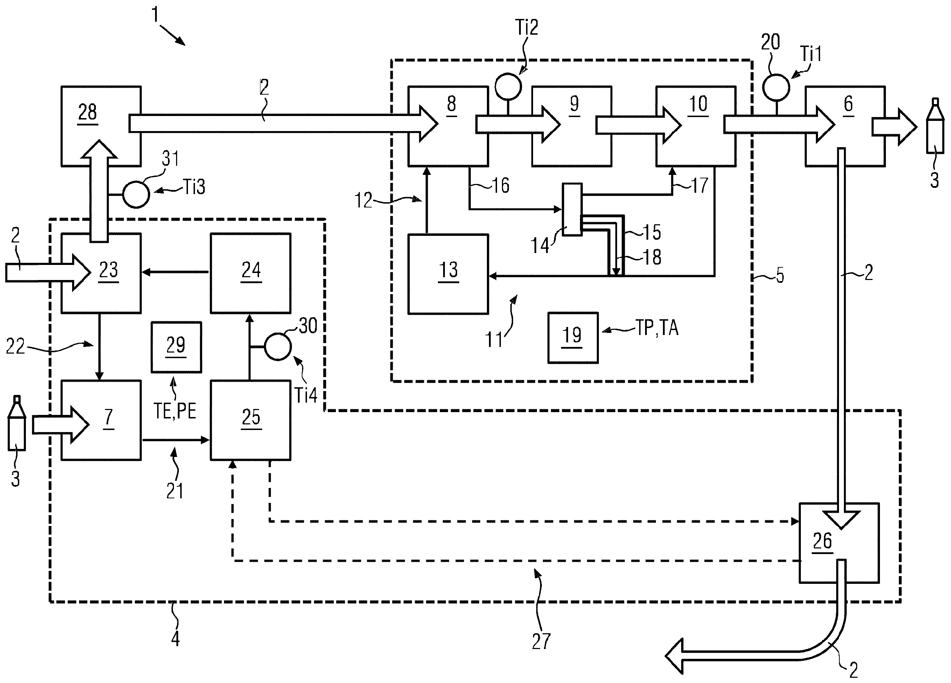

Eine bevorzugte Ausführungsform ist zeichnerisch dargestellt. Die einzige Figur zeigt ein Fließschema der Abfüllanlage zur Heißabfüllung.

Wie die Figur erkennen lässt, umfasst die Abfüllanlage 1 zur Heißabfüllung eines flüssigen Produkts 2 (Blockpfeile) in Behälter / Flaschen 3 eine Vorwärmstufe 4 zur eingangsseitigen Vorwärmung des Produkts 2 für dessen Entgasung, eine Pasteurisierungsstufe 5 zur Pasteurisierung des Produkts 2, eine Füllmaschine 6 zum Abfüllen des pasteurisierten Produkts 2 in die Behälter / Flaschen 3 und einen Behälterkühler 7 zum Kühlen der mit dem Produkt 2 gefüllten Behälter / Flaschen 3.

Die Pasteurisierungsstufe 5 umfasst einen Produkterhitzer 8 zum Erhitzen des Produkts 2 auf eine vorgegebene Pasteurisierungstemperatur TP, eine Heißhaltestrecke 9 zum Halten des Produkts 2 auf der Pasteurisierungstemperatur TP, einen Trimmkühler 10 zum Abkühlen des Produkts 2 von der Pasteurisierungstemperatur TP auf eine vorgegebene Abfülltemperatur TA und einen Heißwasserkreislauf 11 zum Wärmetausch eines darin geführten ersten Übertragungsfluids 12 (einfache durchgezogene Pfeile) mit dem Produkt 2 sowohl im Produkterhitzer 8 als auch im Trimmkühler 10.

Der Heißwasserkreislauf 11 umfasst ferner einen Erhitzer 13 für das erste Übertragungsfluid 12, vorzugsweise in Form eines Dampferhitzers, und eine an einem maschinell steuerbaren / regelbaren und dadurch graduell verstellbaren Ventil 14 abzweigende Umgehungsleitung 15 zur Umgehung des Trimmkühlers 10. Am Ventil 14 lässt sich der Rückstrom 16 des ersten Übertragungsfluids 12 vom Produkterhitzer 8 auf einen den Trimmkühler 10 durchfließenden ersten Teilstrom 17 und einen den Trimmkühler 10 durch die Umgehungsleitung 15 umgehenden zweiten Teilstrom 18 aufteilen.

Das Ventil 14 wird beispielsweise von einer schematisch angedeuteten Regelung 19 in Abhängigkeit von einer stromabwärts des Trimmkühlers mit einem Temperatursensor 20 gemessenen ersten Ist-Temperatur Ti1 des Produkts 2 und der in der Regelung 19 gespeicherten Abfülltemperatur TA eingestellt.

Die Regelung 19 vergleicht die erste Ist-Temperatur Ti1 mit der Abfülltemperatur TA im Sinne einer Solltemperatur zur Abfüllung des Produkts 2 in der Füllmaschine 6. Durch geeignete Aufteilung des Rückstroms 16 auf den ersten Teilstrom 17 und den zweiten Teilstrom 18 am Ventil 14 wird die erste Ist-Temperatur Ti1 im Produktionsbetrieb auf ansonsten regelungstechnisch prinzipiell bekannte Weise laufend an die vorgegebene Abfülltemperatur TA angeglichen.

Die Leistung des Erhitzers 13 wird in Abhängigkeit von der am Trimmkühler 10 zurückgewonnenen Wärmemenge und der in der Regelung 19 gespeicherten Pasteurisierungstemperatur TP auf geeignete Weise von der Regelung 19 angepasst, sodass das Produkt 2 im Produkterhitzer 8 und in der Heißhaltestrecke 9 auf die Pasteurisierungstemperatur TP erhitzt wird. Zu diesem Zweck wird beispielsweise am Produkterhitzer 8 oder stromabwärts davon eine zweite Ist-Temperatur Ti2 gemessen und mit der Pasteurisierungstemperatur TP im Sinne einer Solltemperatur verglichen.

Die Vorwärmstufe 4 umfasst einen Warmwasserkreislauf 21 für ein zweites Übertragungsfluid 22 (einfache durchgezogene Pfeile).

Die Übertragungsfluide 12, 22 sind beispielsweise herkömmliches Brauchwasser.

Die Vorwärmstufe 4 umfasst ferner einen Vorwärmer 23 zum Erwärmen des Produkts 2 vorzugsweise auf eine vorgegebene Entgasungstemperatur TE, einen optionalen Zwischenerhitzer 24 zum zusätzlichen Wärmeeintrag in den Wärmekreislauf 21 und einen optionalen Wärmetauscher 25, mit dem aus einem Rückkühler 26 zurückgeführte Wärme mittels eines dritten Übertragungsfluids 27 (einfache gestrichelte Pfeile) an den Warmwasserkreislauf 21 übertragen werden kann.

Das im Behälterkühler 7 erwärmte zweite Übertragungsfluid 22 wird dann vorzugsweise zuerst durch den Wärmetauscher 25 und anschließend bedarfsweise durch den Zwischenerhitzer 24 geleitet, um eine dritte Ist-Temperatur Ti3 des Produkts 2 an die vorgegebene Entgasungstemperatur TE zur Entgasung des Produkts 2 in einem schematisch angedeuteten Entgaser 28 anzupassen.

Das zweite Übertragungsfluid 22 ist vorzugsweise Kühlwasser für die gefüllten Behälter / Flaschen 3. Alternativ oder ergänzend kann es sich aber auch um ein Sekundärmedium handeln, z.B. Wasser, welches in einem separaten Wärmetauscher (nicht dargestellt) mit dem Kühlwasser für die gefüllten Behälter / Flaschen 3 erhitzt wurde.

Zu diesem Zweck kann beispielsweise eine weitere Regelung 29 vorhanden sein, die beispielsweise die Wärmeleistung des Zwischenerhitzers 24 so regelt, dass die dritte Ist-Temperatur Ti3 an die jeweils vorgegebene Entgasungstemperatur TE angepasst wird.

Der Zwischenerhitzer 24 ist vorteilhaft, wenn die vom Behälterkühler 7 und/oder vom Rückkühler 26 erzeugte Abwärme schwankt und insbesondere nicht zum Erwärmen des Produkts 2 auf die Entgasungstemperatur TE ausreicht. Dies kann beispielsweise beim Anfahren der Abfüllanlage 1 der Fall sein.

Abwärme am Rückkühler 26 entsteht im Dauerbetrieb dadurch, dass die Füllmaschine 6 mit einer Überströmung des zuvor pasteurisierten und trimmgekühlten Produkts 2 betrieben wird. Das heißt, für einen stabilen Anlagenbetrieb wird in der Regel mehr Produkt 2 zur Füllmaschine 6 gefördert, als von der Füllmaschine 6 in die Behälter / Flaschen 3 abgefüllt wird. Diese sogenannte Überströmung des Produkts 2 zur Füllmaschine 6 beträgt in der Regel 5 bis 15%, wobei die jeweils nicht abgefüllte Menge des Produkts 2 von der Füllmaschine 6 über einen Rückführkreis zurückgeführt und dabei im Rückkühler 26 auf eine Eingangstemperatur / Lagertemperatur zur erneuten Verarbeitung des Produkts 2 abgekühlt wird. Die Funktionen der Überströmung, Produktrückführung und Rückkühlung des Produkts 2 sind prinzipiell bekannt und daher nicht im Detail erläutert.

Ergänzend oder alternativ ist es aber auch möglich, mit der Regelung 29 die vorgegebene Entgasungstemperatur TE und einen dazu passend vorgegebenen Entgasungsdruck PE im Entgaser 28 an die im Wärmekreislauf 21 zur Verfügung stehende Wärmemenge im Sinne von dynamischen Sollwerten anzupassen, insbesondere situationsbedingt, beispielsweise beim Hochfahren der Abfüllanlage 1. Beispielsweise könnte die Entgasungstemperatur TE im Bereich von 50 bis 70 °C variiert und der Entgasungsdruck PE entsprechend angepasst werden. Bei einem Absinken der Entgasungstemperatur wäre der Entgasungsdruck PE dann zu reduzieren, also das Vakuum im Entgaser 28 zu verstärken.

Die dritte Ist-Temperatur Ti3 des Produkts 2 (im Idealfall entsprechend der Entgasungstemperatur TE) kann beispielsweise unmittelbar stromabwärts des Vorwärmers 23 und somit stromaufwärts des Entgasers 28 mit einem weiteren Temperatursensor 31 gemessen werden. Ferner könnte ein zusätzlicher Temperatursensor 30 zwischen dem Wärmetauscher 25 und dem Zwischenerhitzer 24 im Wärmekreislauf 21 angeordnet sein, um eine vierte Ist-Temperatur Ti4 zu messen. Die Regelung 29 erhält dann von den Temperatursensoren 30, 31 entsprechende Messsignale, um die Wärmeleistung des Zwischenerhitzers 24 und/oder die Entgasungstemperatur TE samt Entgasungsdruck PE anzupassen. Denkbar wäre auch eine geregelte Drosselung des Wärmekreislaufs 21, falls im beispielsweise der Behälterkühler 7 zu viel Abwärme anfällt.

Auch wäre es denkbar, den Zwischenerhitzer 24 nur bei vergleichsweise großen Schwankungen der aus dem Behälterkühler 7 und/oder dem Rückkühler 26 zur Verfügung gestellten Abwärme, beispielsweise beim Anfahren der Abfüllanlage 1, einzusetzen und bei vergleichsweise geringen Schwankungen der im Wärmekreislauf 21 zur Verfügung stehenden Wärmemenge die vorgegebene Entgasungstemperatur TE und den Entgasungsdruck PE anzupassen. Dadurch ließe sich die Energieeffizienz der Abfüllanlage 1 und des beschriebenen Verfahrens zur Heißabfüllung flüssiger Produkte 2 gegebenenfalls optimieren.

Das flüssige Produkt 2 ist vorzugsweise ein Getränk, das eine Pasteurisierungstemperatur TP von 95 bis 140 °C und eine anschließende Heißabfüllung erfordert. Die Abfülltemperatur TA des Produkts 2 liegt vorzugsweise bei 80 bis 85 °C. Die Entgasungstemperatur TE des Produkts 2 liegt vorzugsweise bei 50 bis 70 °C und vorzugsweise bei 55 bis 65 °C.

Zur besseren Übersicht wurden die Regelungen 19, 29 als separate Einheiten schematisch dargestellt. Es versteht sich jedoch, dass die Funktionen der Regelungen 19, 29 auch mit einer einzigen Regeleinheit oder einer Vielzahl von Regeleinheiten erzielt werden können.

Die beschriebene Wärmerückgewinnung in einem Hochtemperaturbereich mit dem Heißwasserkreislauf 11 und einem davon getrennten Niedrigtemperaturbereich mit dem Warmwasserkreislauf 21 ermöglicht eine besonders energieeffiziente Betriebsweise der Abfüllanlage 1.

Die beschriebene Vorwärmung des Produkts 2 ist nicht an eine Entgasung gebunden. Das im Vorwärmer 23 erwärmte Produkt 2 könnte auch ohne zwischengeschalteten Entgaser 28 zur Pasteurisierungsstufe 5 geleitet werden. In diesem Fall wäre es beispielsweise möglich, die in der Vorwärmstufe 4 maximal übertragbare / zur Verfügung stehende Wärmemenge, je nach verfügbarer Abwärme aus dem Behälterkühler 7 und/oder dem Rückkühler 26, an das Produkt 2 zu übertragen und die Wärmeleistung der Pasteurisierungsstufe 5, also des Produkterhitzers 8, beispielsweise mittels des Erhitzers 13 so anzupassen, dass das Produkt 2 auf die Pasteurisierungstemperatur TP erhitzt wird.

Die Kühlleistung des Trimmkühlers 10 könnte passend dazu durch Regelung des ersten und zweiten Teilstroms 17, 18, also durch entsprechend graduelle Einstellung des Ventils 14 angepasst werden.

Es wäre aber auch denkbar, die Wärmeleistung der Vorwärmstufe 4, also des Vorwärmers 23, je nach Bedarf für eine Vorwärmung an die Pasteurisierungsstufe 5 anzupassen. Beispielsweise kann es aus regelungstechnischer Sicht vorteilhaft sein, die Pasteurisierungsstufe 5 unter möglichst konstanten Bedingungen zu fahren, also die Wärmeleistung des Erhitzers 13 und die Kühlleistung des Trimmkühlers 10 möglichst wenig zu verändern/anzupassen.

Auch in diesem Fall wäre durch die Trennung der Übertragungsfluide 12, 22, 27 des Heißwasserkreislaufs 11 und des Warmwasserkreislaufs 21 voneinander eine gegenüber bekannten Abfüllanlagen und Verfahren effizientere Wärmerückgewinnung für die Heißabfüllung des Produkts 2 gegeben.

Im Betrieb der Abfüllanlage 1 kann das Produkt 2 beispielsweise beim Anfahren, wenn am Behälterkühler 7 und/oder Rückkühler 26 nur geringe oder noch keine Abwärme zur Verfügung steht, durch Zuschalten des Zwischenerhitzers 24 vorgewärmt werden und dadurch auf die vorgegebene Entgasungstemperatur TE gebracht werden.

Ebenso ist es denkbar, beispielsweise beim Anfahren der Abfüllanlage, vorübergehend die vorgegeben Entgasungstemperatur abzusenken und mit ihr auch den Entgasungsdruck PE, um mit der jeweils zur Verfügung stehenden Abwärme aus dem Behälterkühler 7 und/oder dem Rückkühler 26 gegebenenfalls auch ohne Zuschalten des Zwischenerhitzers 24 ausreichend vorwärmen zu können.

Anschließend könnten die Entgasungstemperatur TE und der Entgasungsdruck PE an einen optimalen Arbeitspunkt für den Dauerbetrieb der Abfüllanlage angepasst werden, also für den Fall, dass am Behälterkühler 7 und am Rückkühler 26 eine für den Dauerbetrieb kalkulierte Mindestmenge an Abwärme zur Verfügung steht.

## Patentansprüche

1. Abfüllanlage (1) zur Heißabfüllung eines flüssigen Produkts (2) in Behälter, insbesondere Flaschen (3), mit einer Vorwärmstufe (4) zur eingangsseitigen Erwärmung des Produkts insbesondere für dessen Entgasung, mit einer Pasteurisierungsstufe (5) zur Pasteurisierung des Produkts, mit einer Füllmaschine (6) und mit einem Behälterkühler (7), wobei die Pasteurisierungsstufe umfasst: einen Produkterhitzer (8); einen Trimmkühler (10) für das zuvor pasteurisierte Produkt; und einen Heißwasserkreislauf (11) zum Wärmetausch mit dem Produkt im Produkterhitzer und im Trimmkühler, und
wobei die Vorwärmstufe umfasst: einen Produktwärmer (23); und einen vom Heißwasserkreislauf getrennten Warmwasserkreislauf (21) zur Wärmeabgabe an das Produkt im Produktwärmer sowie zur Wärmerückgewinnung aus dem Behälterkühler und/oder aus einem Rückkühler (26) für aus dem Bereich der Füllmaschine zurückgeführtes Produkt,
wobei der Heißwasserkreislauf (11) eine mittels eines Ventils (14) insbesondere graduell zuschaltbare Umgehungsleitung (15) zur Umgehung des Trimmkühlers (10) umfasst.

2. Abfüllanlage nach Anspruch 1, ferner mit einer Regelung (19) zur Anpassung einer stromabwärts des Trimmkühlers (10) gemessenen Ist-Temperatur (Ti1) des Produkts (2) an eine Solltemperatur, insbesondere eine Abfülltemperatur (TA) zur unmittelbar anschließenden Heißabfüllung, durch anteilige Durchflussaufteilung am Ventil (14) zum Trimmkühler (10) und zur Umgehungsleitung (15) hin.

3. Abfüllanlage nach einem der vorigen Ansprüche, ferner mit einem Entgaser (28) und einer zugehörigen Steuerung (29), die zur Anpassung eines Entgasungsdrucks (PE) an eine mittels der Vorwärmstufe (4) vorgegebene / eingestellte Entgasungstemperatur (TE) ausgebildet ist.

4. Abfüllanlage nach einem der vorigen Ansprüche, ferner mit einem Entgaser (28) und einem in der Vorwärmstufe (4) angeordneten Zwischenwärmer (24) zur Erwärmung des Produkts (2) in Ergänzung zum Produktwärmer (23) auf eine Entgasungstemperatur (TE) des Entgasers durch zusätzlichen Wärmeeintrag in den Warmwasserkreislauf (21).

5. Verfahren zur Heißabfüllung eines flüssigen Produkts (2), wobei man das Produkt eingangsseitig insbesondere für dessen Entgasung vorwärmt, dann pasteurisiert, dann für die Abfüllung trimmkühlt und dann in Behälter, insbesondere Flaschen (3), heißabfüllt sowie ferner die gefüllten Behälter mit Wasser kühlt, wobei beim Trimmkühlen zurückgewonnenen Wärme in einem Heißwasserkreislauf (11) geführt und von diesem für die Pasteurisierung an das Produkt abgegeben wird, und wobei bei der Behälterkühlung gewonnene Wärme und/oder bei der Rückkühlung von auf Abfülltemperatur erhitztem und aus dem Bereich der Abfüllung zurückgeführtem Produkt gewonnene Wärme getrennt vom Heißwasserkreislauf in einem Warmwasserkreislauf (21) geführt und von diesem für die Vorwärmung an das Produkt abgegeben wird, wobei ein im Heißwasserkreislauf (11) von der Pasteurisierung zurückgeführtes erstes Übertragungsfluid (12) elektronisch gesteuert / geregelt auf einen zum Trimmkühlen verwendeten ersten Teilstrom (17) und einen das Trimmkühlen umgehenden zweiten Teilstrom (18) aufgeteilt wird.

6. Verfahren nach Anspruch 5, wobei der erste Teilstrom (17) in Abhängigkeit von einer Solltemperatur des Produkts (2) und einer Ist-Temperatur (Ti1) des Produkts stromabwärts des Trimmkühlens graduell geregelt wird.

7. Verfahren nach wenigstens einem der Ansprüche 5 bis 6, wobei das Produkt (2) beim Trimmkühlen im Wesentlichen auf Abfülltemperatur (TA) gekühlt wird.

8. Verfahren nach wenigstens einem der Ansprüche 5 bis 7, wobei das Produkt (2) auf eine Pasteurisierungstemperatur (TP) von 95 bis 140 °C erhitzt wird.

9. Verfahren nach wenigstens einem der Ansprüche 5 bis 7, wobei das Produkt (2) auf eine Entgasungstemperatur (TE) von 50 bis 70 °C vorgewärmt wird.

10. Verfahren nach Anspruch 9, wobei ein durch die Behälterkühlung erwärmtes zweites Übertragungsfluid (22) im Warmwasserkreislauf (21) bedarfsweise durch einen Zwischenerhitzer (24) geleitet wird, um eine Ist-Temperatur (Ti3) des Produkts (2) durch Regelung der Wärmeleistung des Zwischenerhitzers (24) an eine vorgegebene Entgasungstemperatur (TE) zur Entgasung des Produkts (2) in einem Entgaser (28) anzupassen.

11. Verfahren nach Anspruch 10, wobei das Produkt (2) durch zusätzlichen Wärmeeintrag in den Wärmekreislauf (21) mittels des Zwischenerhitzers (24) zusätzlich erwärmt wird, wenn die die bei der Behälterkühlung gewonnene Abwärme und/oder die bei der Rückkühlung gewonnene Abwärme unter einem Schwellenwert für eine normale Abfüllung im Dauerbetrieb liegt.

12. Verfahren nach Anspruch 10 oder 11, wobei die vorgegebene Entgasungstemperatur (TE) und ein dazu passend vorgegebener Entgasungsdruck (PE) im Entgaser (28) mittels Regelung (29) an die im Warmwasserkreislauf (21) zur Verfügung stehende Wärmemenge im Sinne von dynamischen Sollwerten angepasst werden.

13. Verfahren nach wenigstens einem der Ansprüche 5 bis 12, wobei das flüssige Produkt (2) ein Getränk ist und in Flaschen oder Fässer abgefüllt wird.

## Claims

1. A filling plant (1) for hotfilling a liquid product (2) into containers, in particular bottles (3), including a preheating stage (4) for heating the product at an inlet side, in particular for degassing the same, a pasteurization stage (5) for pasteurizing the product, a filling machine (6) and a container cooling device (7), wherein the pasteurization stage comprises:
a product heating device (8); a trim cooler (10) for the pasteurized product; and a hot water circuit (11) for heat exchange with the product in the product heating device and the trim cooler, and wherein the preheating stage comprises:
a product warming device (23) and a warm water circuit (21) separated from the hot water circuit for transferring heat to the product in the product warming device as well as for recovering heat from the container cooling device and/or from a recooler (26) for product recirculated from the filling machine,
wherein the hot water circuit (11) comprises a bypass line (15) for bypassing the trim cooler (10), in particular gradually connectable by means of a valve (14).

2. The filling plant according to claim 1, further including a controller (19) for adjusting an actual temperature (Ti1) of the product (2) measured downstream of the trim cooler (10) to a set temperature, in particular a filling temperature (TA) for immediate subsequent filling by proportionate flow division towards the trim cooler (10) and the bypass line (15) at the valve (14).

3. The filling plant according to anyone of the preceding claims further including a degasser (28) and an associated controller (29) configured to adjust a degassing pressure (PE) to a degassing temperature (TE) predetermined/set by means of the preheating stage (4).

4. The filling plant according to anyone of the preceding claims further including a degasser (28) and an intermediate heater (24) arranged in the preheating stage (4) for heating the product (2) in addition to the product heating device (23) up to a degassing temperature (TE) of the degasser by supplying additional heat to the warm water circuit (21).

5. A method for hot filling a liquid product (2) wherein the product is preheated at an inlet side, in particular for degassing the same, afterwards pasteurized, thereafter trim cooled for filling and finally hot filled into containers, in particular bottles (3) and further the filled containers are cooled with water, wherein heat recovered during trim cooling is supplied to a hot water circuit (11) and afterwards delivered to the product for pasteurizing the same, and wherein heat recovered during cooling of the containers and/or during re-cooling off the product heated to the filling temperature and recirculated from the filling area is conducted separately from the hot water circuit in a warm water circuit (21) and delivered to the product for preheating, wherein first transfer fluid (12) recirculated from the pasteurization in the hot water circuit (11) is divided into a first substream (17) used for trim cooling and a second substream (18) bypassing the trim cooling in a controlled way.

6. The method according to claim 5, wherein the first substream (17) is gradually controlled as a function of the set temperature of the product (2) and an actual temperature (Ti1) of the product downstream of the trim cooling.

7. The method according to anyone of claims 5 to 6, wherein the product (2) is substantially cooled to the filling temperature (TA) during trim cooling.

8. The method according to anyone of claims 5 to 7, wherein the product (2) is cooled to a pasteurization temperature (TP) from 95 to 140 °C.

9. The method according to anyone of claims 5 to 7, wherein the product (2) is preheated to a degassing temperature (TE) from 50 to 70 °C.

10. The method according to claim 9, wherein a second transfer fluid (22) warmed due to the cooling of the containers is conducted through an intermediate heater (24) in the warm water circuit (21) as needed to adjust an actual temperature (Ti3) of the product (2) to a predetermined degassing temperature (TE) for degassing the product (2) in a degasser (28) by regulating the heat output of the intermediate heater (24).

11. The method according to claim 10, wherein the product (2) is additionally heated by supplying additional heat to the warm water circuit (21) by means of the intermediate heater (24a) in case the waste heat obtained from cooling the containers and/or the waste heat obtained during recooling is below a threshold for a normal filling in continuous operation.

12. The method according to claims 10 or 11, wherein the predetermined degassing temperature (TE) and a predetermined degassing pressure (PE) in the degasser (28) matching the same are adjusted to the amount of heat available in the warm water circuit (21) in the form of dynamic set values by means of feedback control (29).

13. The method according to anyone of claims 5 to 12, wherein the liquid product (2) is a beverage and is filled into bottles and barrels.

## Revendications

1. Installation de remplissage (1) permettant de verser à chaud un produit liquide (2) dans des récipients, en particulier dans des bouteilles (3), comprenant un étage de préchauffage (4) permettant de chauffer le produit côté entrée, en particulier en vue du dégazage de celui-ci, comprenant un étage de pasteurisation (5) permettant de pasteuriser le produit, comprenant une machine de remplissage (6) et comprenant un refroidisseur de récipient (7), dans laquelle l'étage de pasteurisation comprend : un réchauffeur de produit (8) ; un refroidisseur complémentaire (10) destiné au produit préalablement pasteurisé ; et un circuit d'eau chaude (11) permettant un échange de chaleur avec le produit au sein du réchauffeur de produit et du refroidisseur complémentaire, et
dans laquelle l'étage de préchauffage comprend : un réchauffeur de produit (23) ; et un circuit d'eau tiède (21) séparé du circuit d'eau chaude et permettant un transfert de chaleur au produit au sein du réchauffeur de produit ainsi que permettant une récupération de chaleur à partir du refroidisseur de récipient et/ou à partir d'un aéroréfrigérant (26) pour le produit ramené de la région de la machine de remplissage, dans laquelle le circuit d'eau chaude (11) comprend une conduite de dérivation (15) pouvant être activée, en particulier progressivement, au moyen d'une vanne (14) et permettant de contourner le refroidisseur complémentaire (10).

2. Installation de remplissage selon la revendication 1, comprenant en outre un dispositif de régulation (19) permettant d'adapter une température réelle (Ti1) du produit (2), mesurée en aval du refroidisseur complémentaire (10), à une température de consigne, en particulier à une température de remplissage (TA) permettant un remplissage à chaud immédiatement consécutif, grâce à une répartition proportionnelle de débit au niveau de la vanne (14) en direction du refroidisseur complémentaire (10) et de la conduite de dérivation (15).

3. Installation de remplissage selon l'une quelconque des revendications précédentes, comprenant en outre un dégazeur (28) et une commande (29) associée qui est conçue pour adapter une pression de dégazage (PE) à une température de dégazage (TE) prédéfinie/ajustée au moyen de l'étage de préchauffage (4).

4. Installation de remplissage selon l'une quelconque des revendications précédentes, comprenant en outre un dégazeur (28) et un réchauffeur intermédiaire (24) agencé dans l'étage de préchauffage (4) et permettant de chauffer le produit (2) en complément du réchauffeur de produit (23) jusqu'à une température de dégazage (TE) du dégazeur grâce à un apport de chaleur supplémentaire dans le circuit d'eau tiède (21).

5. Procédé de remplissage à chaud d'un produit liquide (2), dans lequel le produit est préchauffé côté entrée, en particulier en vue du dégazage de celui-ci, puis pasteurisé, puis refroidi complémentairement en vue du remplissage, puis versé à chaud dans des récipients, en particulier dans des bouteilles (3), et les récipients remplis sont en outre refroidis avec de l'eau, dans lequel, lors du refroidissement complémentaire, la chaleur récupérée est acheminée dans un circuit d'eau chaude (11) et cédée par celui-ci au produit en vue de la pasteurisation, et dans lequel la chaleur obtenue lors du refroidissement de récipient et/ou la chaleur obtenue lors de l'aéroréfrigération du produit chauffé à la température de remplissage et récupérée à partir de la région de remplissage est/sont guidée(s) séparément du circuit d'eau chaude jusqu'à un circuit d'eau tiède (21) et cédée(s) par celui-ci au produit en vue du préchauffage, dans lequel un premier fluide de transfert (12) récupéré dans le circuit d'eau chaude (11) par la pasteurisation est divisé de manière électroniquement commandé/régulé en un premier flux partiel (17) utilisé pour le refroidissement complémentaire et en un second flux partiel (18) contournant le refroidissement complémentaire.

6. Procédé selon la revendication 5, dans lequel le premier flux partiel (17) est régulé de manière progressive en fonction d'une température de consigne du produit (2) et d'une température réelle (Ti1) du produit en aval du refroidissement complémentaire.

7. Procédé selon au moins l'une quelconque des revendications 5 à 6, dans lequel le produit (2) est essentiellement refroidi à la température de remplissage (TA) lors du refroidissement complémentaire.

8. Procédé selon au moins l'une quelconque des revendications 5 à 7, dans lequel le produit (2) est chauffé à une température de pasteurisation (TP) comprise entre 95 et 140°C.

9. Procédé selon au moins l'une quelconque des revendications 5 à 7, dans lequel le produit (2) est chauffé à une température de dégazage (TE) comprise entre 50 et 70°C.

10. Procédé selon la revendication 9, dans lequel un second fluide de transfert (22) chauffé grâce au refroidissement de récipient est conduit jusque dans le circuit d'eau tiède (21), si nécessaire en passant par un réchauffeur intermédiaire (24), afin d'adapter, grâce à un dispositif de régulation de la puissance thermique du réchauffeur intermédiaire (24), une température réelle (Ti3) du produit (2) à une température de dégazage (TE) prédéfinie permettant de dégazer le produit (2) dans un dégazeur (28).

11. Procédé selon la revendication 10, dans lequel le produit (2) est chauffé de manière supplémentaire au moyen du réchauffeur intermédiaire (24) grâce à un apport de chaleur supplémentaire dans le circuit de chaleur (21), lorsque la chaleur résiduelle obtenue lors du refroidissement de récipient et/ou la chaleur obtenue lors de l'aéroréfrigération est/sont inférieure(s), en fonctionnement continu, à une valeur de seuil pour un remplissage normal.

12. Procédé selon la revendication 10 ou 11, dans lequel la température de dégazage (TE) prédéfinie et une pression de dégazage (PE) prédéfinie de manière correspondante sont adaptées en termes de valeurs de consigne dynamiques, au sein du dégazeur (28) et au moyen d'un dispositif de régulation (29), à la quantité de chaleur disponible dans le circuit d'eau tiède (21).

13. Procédé selon au moins l'une quelconque des revendications 5 à 12, dans lequel le produit liquide (2) est une boisson et est versé dans des bouteilles ou dans des fûts.
